# EUROPEAN PATENT APPLICATION

(11) **EP 4 507 044 A1**
(43) Date of publication of application: **12.02.2025**
(21) Application number: 23832941.1
(22) Date of filing: 21.06.2023
(51) Int. Cl.: H01M 10/04, B65G 57/00

(54) **PRE-STACKING APPARATUS AND BATTERY PROCESSING DEVICE**

(71) Applicant: Contemporary Amperex Technology (Hong Kong) Limited, Central, Central And Western District (HK)
(72) Inventor: CAO, Wei, Fujian 352100 (CN); LI, Bingchao, Fujian 352100 (CN); WU, Ying, Fujian 352100 (CN)
(74) Representative: Gong, Jinping
(86) International application number: PCT/CN2023/101764
(87) International publication number: WO 2024/259646

(57) **Abstract**

This application relates to a pre-stacking apparatus and battery processing equipment. The pre-stacking apparatus includes a mounting seat (10), a tray (20), a first clamping assembly (30), a second clamping assembly (40), and a pushing assembly (50). The second clamping assembly (40) is disposed movably along a height direction of the battery cells, allowing the second clamping assembly (40) to smoothly clamp the battery cells when the battery cells have moved to a pressurization position (12) while not affecting the movement of the battery cells along with the tray (20) otherwise, thus achieving smooth movement of the battery cells between the pre-stacking position (11) and the pressurization position (12).

## Description

### TECHNICAL FIELD

This application relates to the field of battery technologies, and in particular, to a pre-stacking apparatus and battery processing equipment.

### BACKGROUND

During production of batteries, it is necessary to pre-stack a plurality of battery cells and then assemble the pre-stacked battery cells to form a battery module or battery.

However, in current processes of pre-stacking battery cells, the battery cells are likely to tilt, resulting in a low efficiency of the pre-stacking process, and even affecting, in severe cases, the structural stability of the battery module or battery assembled subsequently.

### SUMMARY

Based on this, this application provides a pre-stacking apparatus and battery processing equipment.

According to a first aspect, this application provides a pre-stacking apparatus, including:
a mounting seat, where the mounting seat is provided with a pre-stacking position and a pressurization position;
a tray, disposed on the mounting seat, where the tray is configured to bear at least two battery cells, and the battery cells are arranged along a thickness direction of the battery cells;
a first clamping assembly, disposed on the tray and configured to clamp the battery cells on the tray;
a second clamping assembly, disposed in the pressurization position and configured to be capable of being apart from the first clamping assembly along a height direction of the battery cells when the tray has moved from the pre-stacking position to the pressurization position, and to clamp the battery cells on the tray; and
a pushing assembly, movably disposed in the pressurization position along an arrangement direction of the battery cells and configured to push the battery cells on the tray in the pressurization position to attach to each other.

In the technical solution of embodiments of this application, when the battery cells on the tray are pushed to attach to each other, the first clamping assembly and the second clamping assembly can be apart from each other along the height direction of the battery cells and clamp and fix two opposite ends of the battery cells along the height direction at the same time. This can balance the friction between the battery cells and a surface supporting them, thus allowing for smoother process of pre-stacking the battery cells and reducing the tilting possibility of the battery cells during pre-stacking.

In some embodiments, the second clamping assembly is movably disposed on the mounting seat along the height direction of the battery cells.

In the technical solution of the embodiments of this application, the second clamping assembly being movably disposed along the height direction of the battery cells allows the second clamping assembly to smoothly clamp the battery cells when the battery cells have moved to the pressurization position while not affecting the movement of the battery cells along with the tray otherwise, thus achieving smooth movement of the battery cells between the pre-stacking position and the pressurization position.

In some embodiments, the first clamping assembly and the second clamping assembly each include a first clamping member and a second clamping member that are respectively disposed on two sides of the tray along a width direction of the battery cells, at least one of the first clamping member and the second clamping member being movably disposed along the width direction of the battery cells.

In the technical solution of the embodiments of this application, with the first clamping member and the second clamping member provided, the battery cells can be smoothly clamped to be stably disposed on the tray and kept in balance during pressurization.

In some embodiments, the second clamping assembly further includes a main body and a first drive member, where the first drive member is connected between the main body and the mounting seat and configured to drive the main body to move along the height direction of the battery cells;
where the first clamping member and the second clamping member in the second clamping assembly are disposed on the main body.

In the technical solution of the embodiments of this application, with the main body and the first drive member provided, the first clamping member and the second clamping member can be driven to move along the height direction of the battery cells, thus clamping and fixing the battery cells during pressurization and avoiding the battery cells when pressurization is not needed.

In some embodiments, the second clamping assembly further includes a limit assembly disposed on the main body and located between the first clamping member and the second clamping member, the limit assembly being configured to press the battery cells on the tray along the height direction of the battery cells.

In the technical solution of the embodiments of this application, when the first clamping member and the second clamping member clamp the upper side of the battery cells along the width direction of the battery cells, the limit assembly is located between the first clamping member and the second clamping member and can press the battery cells downwards, allowing the battery cells to be stably supported on the support surface of the tray. Thereby, the battery cells can be more stable during pre-stacking.

In some embodiments, the limit assembly includes a telescopic member and a pressing member, where the telescopic member is retractably connected between the main body and the pressing member along the height direction of the battery cells, and the pressing member is configured to press the battery cells on the tray along the height direction of the battery cells.

In the technical solution of the embodiments of this application, with the telescopic member and the pressing member provided, the battery cells can be pressed on the tray more stably, so as to be kept in balance while being pushed.

In some embodiments, the pressing member includes a connection portion and a rolling portion, where the connection portion is connected to the telescopic member, and the rolling portion is rollably disposed on the connection portion along the arrangement direction of the battery cells and configured to roll to press the battery cells on the tray along the height direction of the battery cells.

In the technical solution of the embodiments of this application, with the rolling portion provided, rollable pressing can be achieved between the pressing member and the battery cells, and a pressing force can be applied constantly when the battery cells approach each other along the arrangement direction, thus making the pressing process more stable.

In some embodiments, the pushing assembly includes an abutment member and a pushing member, where the abutment member is disposed on the tray, the pushing member is movably disposed on the mounting seat along the arrangement direction of the battery cells, the abutment member and the pushing member are respectively located on two sides of the tray along the arrangement direction of the battery cells, and the pushing member is configured to be capable of pushing, along the arrangement direction of the battery cells, the battery cells on the tray to abut against the abutment member.

In the technical solution of the embodiments of this application, through the cooperation between the abutment member and the pushing member, the plurality of battery cells can be pre-stacked smoothly to closely attach to each other along the arrangement direction, thus facilitating the subsequent assembly.

In some embodiments, the mounting seat includes a base and a support member rotatably disposed on the base, the support member is provided with a pressurization position and at least two pre-stacking positions, where the pressurization position and the at least two pre-stacking positions are spaced along a circumferential direction of the support member, one tray and one first clamping assembly are correspondingly disposed in each of the pre-stacking positions, and the second clamping assembly and the pushing assembly are both disposed in the pressurization position;
where the second clamping assembly is configured to, when one of the trays is rotated to the pressurization position, clamp the battery cells on the tray along a width direction of the battery cells; and the pushing assembly is configured to, when one of the trays is rotated to the pressurization position, push the battery cells on the tray.

In the technical solution of the embodiments of this application, with the support member provided, the battery cells can be stacked synchronously in a plurality of pre-stacking positions and sequentially rotated to the pressurization position for pressurization, thus improving the efficiency of pre-stacking the battery cells.

According to a second aspect, this application provides battery processing equipment including the foregoing pre-stacking apparatus.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

A person of ordinary skill in the art can clearly understand various other advantages and benefits by reading the detailed description of the embodiments below. The accompanying drawings are merely intended to illustrate the embodiments and are not intended to limit this application. In addition, in all the accompanying drawings, same parts are indicated by same accompanying symbols. In the accompanying drawings:
FIG. 1 is a schematic structural diagram of a pre-stacking apparatus according to one or more embodiments.
FIG. 2 is a top view of a pre-stacking apparatus according to one or more embodiments.
FIG. 3 is a schematic structural diagram of a tray in a pre-stacking apparatus according to one or more embodiments.
FIG. 4 is a schematic structural diagram of a second clamping assembly in a pre-stacking apparatus according to one or more embodiments.
FIG. 5 is a locally enlarged view of a position A in FIG. 4.
FIG. 6 is a schematic structural diagram of a first clamping assembly and a second clamping assembly cooperating with each other in a pre-stacking apparatus according to one or more embodiments.
100. pre-stacking apparatus; 10. mounting seat; 20. tray; 30. first clamping assembly; 40. second clamping assembly; 50. pushing assembly; 11. pre-stacking position; 12. pressurization position; 13. base; 14. support member; 31. first clamping member; 32. second clamping member; 41. main body; 42. first drive member; 43. limit assembly; 51. abutment member; 52. pushing member; 431. telescopic member; 432. pressing member; 4321. connection portion; and 4322. rolling portion.

### DETAILED DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fix" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from the perspective of market development, application of traction batteries is being increasingly extensive. Traction batteries have been not only used in energy storage power supply systems such as hydroelectric power plants, thermal power plants, wind power plants, and solar power plants, but also widely used in electric transportation tools such as electric bicycles, electric motorcycles, and electric vehicles, and other fields. With the continuous expansion of the application fields of traction batteries, market demands for traction batteries are also increasing.

A battery cell is a smallest unit constituting a battery. Specifically, a plurality of battery cells may be connected in series, parallel, or series-parallel to form a battery module, and then one or more battery modules are connected and assembled into a battery. Certainly, the plurality of battery cells may be further directly assembled into a battery. Being connected in series-parallel means a combination of series and parallel connections of the plurality of battery cells.

In the process of forming a battery module or battery using battery cells, an adhesive needs to be applied to the surfaces of the battery cells, and then the battery cells are pre-stacked along the thickness direction. Afterward, a pressure is applied to the battery cells to make them attach to each other, and then the battery cells are bonded and fixed using the adhesive paper on the surfaces of adjacent battery cells.

In the process of applying the pressure to the battery cells, a friction is generated between the battery cells and a surface supporting them; and specifications of battery cells from different batches may vary, resulting in different heights of battery cells from different batches. Thereby, when pushed to attach to each other, the battery cells are likely to tilt due to the friction between them and the surface supporting them, affecting the efficiency of pre-stacking the battery cells, even affecting the structural stability of the battery module or battery formed by assembling battery cells.

Given the foregoing considerations, to resolve the current problem that the battery cells are likely to tilt due to poor stability during pre-stacking, one or more embodiments of this application provide a pre-stacking apparatus. A first clamping assembly clamps and fixes the battery cells on a tray, and the battery cells on the tray can move along with the tray from a pre-stacking position to a pressurization position. A second clamping assembly in the pressurization position is apart from the first clamping assembly along the height direction of the battery cells and two clamping assemblies provide double clamping on the battery cells on the tray. In this way, the first clamping assembly and the second clamping assembly respectively clamp and fix two ends of the battery cells along the height direction of the battery cells, balancing the friction between the battery cells and the surface supporting them when the pushing assembly pushes the battery cells to attach to each other, and keeping the battery cells in balance during pressurization, thus reducing the tilting probability of the battery cells.

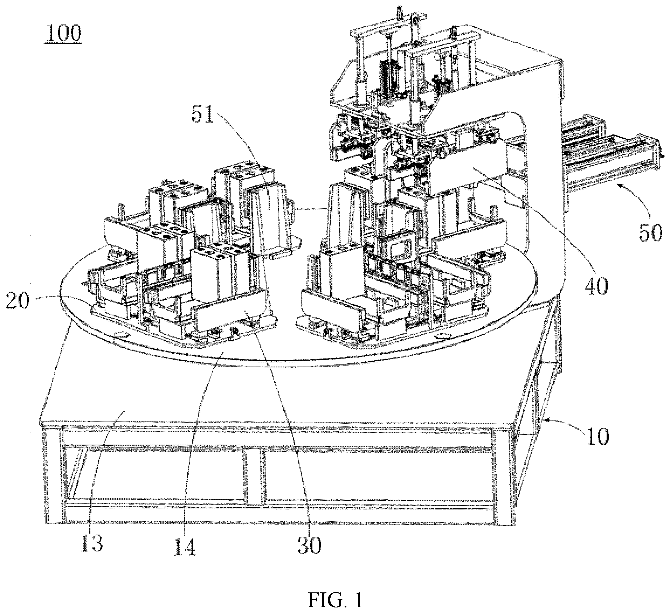

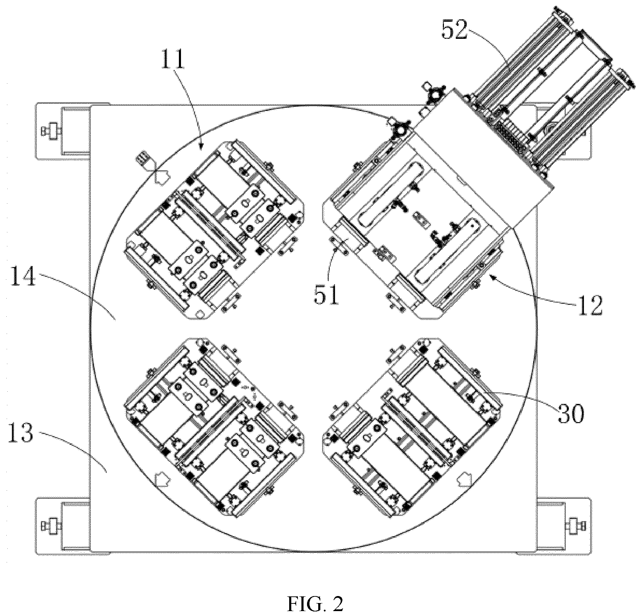

Referring to FIGs. 1 and 2, according to one or more embodiments, this application provides a pre-stacking apparatus 100, including a mounting seat 10, a tray 20, a first clamping assembly 30, a second clamping assembly 40, and a pushing assembly 50. The mounting seat 10 is provided with a pre-stacking position 11 and a pressurization position 12, and the tray 20 is disposed on the mounting seat 10, where the tray 20 is configured to bear at least two battery cells, and the battery cells are arranged along a thickness direction of the battery cells. The first clamping assembly 30 is disposed on the tray 20 and configured to clamp the battery cells on the tray 20. The second clamping assembly 40 is disposed in the pressurization position 12 and capable of being apart from the first clamping assembly 30 along a height direction of the battery cells when the tray 20 has moved from the pre-stacking position 11 to the pressurization position 12, and is configured to clamp the battery cells on the tray 20. The pushing assembly 50 is movably disposed in the pressurization position 12 along an arrangement direction of the battery cells and configured to push the battery cells on the tray 20 in the pressurization position 12 to attach to each other.

It should be noted that the mounting seat 10 refers to a structure able to provide mounting basis for the tray 20, the second clamping assembly 40, and the pushing assembly 50. The pre-stacking position 11 refers to a work position on the mounting seat 10 for stacking a plurality of battery cells. Specifically, the battery cells are moved from the last process to the pre-stacking position 11 and sequentially stacked in the pre-stacking position 11 along the thickness direction, thus completing the preliminary stacking of the battery cells. The pressurization position 12 refers to a work position on the mounting seat 10 for pressing the battery cells pre-stacked, so as to allow the plurality of battery cells to attach to each other. The pre-stacking position 11 and the pressurization position 12 can be switched through rotation, movement, or motion of the mounting seat 10. For example, the mounting seat 10 is rotated to move the tray 20 from the pre-stacking position 11 to the pressurization position 12, or from the pressurization position 12 to the pre-stacking position 11.

The tray 20 refers to a structure, on the mounting seat 10, able to provide support and a stacking space for at least two battery cells, and a plurality of battery cells can be sequentially arranged on the tray 20 along their thickness direction. When the battery cells are supported on the tray 20, the first clamping assembly 30 can clamp and fix the battery cells on the tray 20 along the width direction of the battery cells, thus stabilizing them on the tray 20.

With the second clamping assembly 40 disposed on the pressurization position 12, when the tray 20 has moved from the pre-stacking position 11 to the pressurization position 12, the second clamping assembly 40 in the pressurization position 12 is apart from the first clamping assembly 30 along the height direction of the battery cells. Thereby, the second clamping assembly 40 in the pressurization position 12 can clamp the battery cells on the tray 20 along the width direction of the battery cells. Thereby, as the first clamping assembly 30 and the second clamping assembly 40 respectively clamp two ends of the battery cells along the height direction of the battery cells, when the pushing assembly 50 applies pressure to the battery cells, the friction between the battery cells and the surface supporting them can be balanced, keeping the battery cells in balance, thus reducing the tilting probability of the battery cells during pressurization.

Further, when the battery cells are stacked in the pre-stacking position 11, their poles are usually positioned upwards. In this case, the height direction of the battery cells refers to a direction pointing from a surface on one side provided with the pole to another surface on the opposite side, the width direction of the battery cells refers to a direction perpendicular to the height direction of the battery cells and parallel to the largest side surface of the battery cells, and the thickness direction of the battery cells refers to a direction perpendicular to the largest side surface of the battery cells. The largest side surface of a battery cell refers to a side surface with the largest area of the battery cell.

In addition, at least one first clamping assembly 30 and at least one second clamping assembly 40 are provided, and their specific quantities can be adjusted according to the actual requirements during use, thus stacking a plurality of sets of battery cells. In addition, each first clamping assembly 30 is disposed corresponding to one second clamping assembly 40, which is not further elaborated herein.

With the foregoing structure provided, when the battery cells on the tray 20 are pushed to attach to each other, the first clamping assembly 30 and the second clamping assembly 40 can be apart from each other along the height direction of the battery cells and clamp and fix two opposite ends of the battery cells along the height direction at the same time. This can balance the friction between the battery cells and the surface supporting them, thus allowing for smoother process of pre-stacking the battery cells and reducing the tilting possibility of the battery cells during pre-stacking.

In some embodiments, the second clamping assembly 40 is movably disposed on the mounting seat 10 along the height direction of the battery cells.

Specifically, when the tray 20 has moved from the pre-stacking position 11 to the pressurization position 12, the second clamping assembly 40 descends along the height direction of the battery cells until the second clamping assembly 40 can smoothly clamp the upper side of the battery cells along the width direction of battery cells, helping the pushing assembly 50 apply pressure to the battery cells.

When the tray 20 has not moved to the pressurization position 12, the second clamping assembly 40 does need to clamp the battery cells. In this case, the second clamping assembly 40 ascends along the height direction of the battery cells until the movement of the battery cells on the tray 20 along with the tray 20 between the pre-stacking position 11 and the pressurization position 12 is not affected.

The second clamping assembly 40 being movably disposed along the height direction of the battery cells allows the second clamping assembly 40 to smoothly clamp the battery cells when the battery cells have moved to the pressurization position 12 while not affecting the movement of the battery cells along with the tray 20 otherwise, thus achieving smooth movement of the battery cells between the pre-stacking position 11 and the pressurization position 12.

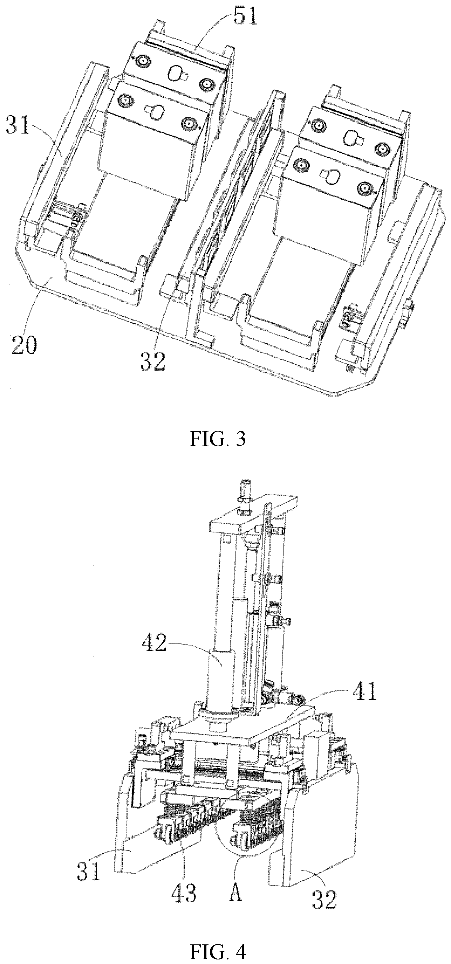

As shown in FIGs. 3 and 4, in some embodiments, the first clamping assembly 30 and the second clamping assembly 40 each include a first clamping member 31 and a second clamping member 32 that are respectively disposed on two sides of the tray 20 along a width direction of the battery cells, at least one of the first clamping member 31 and the second clamping member 32 being movably disposed along the width direction of the battery cells.

Specifically, the first clamping member 31 and the second clamping member 32 in the first clamping assembly 30 may be disposed on two sides of the tray 20 respectively using telescopic cylinders, allowing the first clamping member 31 and the second clamping member 32 to approach or leave each other along the width direction of the battery cells. When the battery cells are disposed on the tray 20, the first clamping member 31 and the second clamping member 32 approach each other and clamp the battery cells. When the battery cells need to be taken out of the tray 20, the first clamping member 31 and the second clamping member 32 leave each other.

The first clamping member 31 and the second clamping member 32 in the second clamping assembly 40 may also be both disposed on the mounting seat 10 using telescopic cylinders, and when the tray 20 has moved to the pressurization position 12, the first clamping member 31 and the second clamping member 32 in the second clamping assembly 40 are located on two sides of the tray 20 along the width direction of the battery cells. The telescopic cylinder is controlled to allow the first clamping member 31 and the second clamping member 32 to approach each other along the width direction of the battery cells, thus clamping the battery cells. After the pressurization, the first clamping member 31 and the second clamping member 32 leave each other along the width direction of the battery cells, thus unclamping the battery cells.

With the first clamping member 31 and the second clamping member 32 provided, the battery cells can be smoothly clamped to be stably disposed on the tray 20 and kept in balance during pressurization.

In some embodiments, the second clamping assembly 40 further includes a main body 41 and a first drive member 42, where the first drive member 42 is connected between the main body 41 and the mounting seat 10 and configured to drive the main body 41 to move along the height direction of the battery cells. The first clamping member 31 and the second clamping member 32 in the second clamping assembly 40 are disposed on the main body 41.

Specifically, the main body 41 may provide a mounting basis for the first drive member 42, the first clamping member 31, and the second clamping member 32. The first drive member 42 may be but is not limited to a downward pressure cylinder, which is configured to drive the main body 41 and carry the first clamping member 31 and the second clamping member 32 on the main body 41 to move along the height direction of the battery cells.

With the main body 41 and the first drive member 42 provided, the first clamping member 31 and the second clamping member 32 can be driven to move along the height direction of the battery cells, thus clamping and fixing the battery cells during pressurization and avoiding the battery cells when pressurization is not needed.

In some embodiments, the second clamping assembly 40 further includes a limit assembly 43 disposed on the main body 41 and located between the first clamping member 31 and the second clamping member 32, the limit assembly 43 being configured to press the battery cells on the tray 20 along the height direction of the battery cells.

When the first clamping member 31 and the second clamping member 32 clamp the upper side of the battery cells along the width direction of the battery cells, the limit assembly 43 is located between the first clamping member 31 and the second clamping member 32 and can press the battery cells downwards, allowing the battery cells to be stably supported on the support surface of the tray 20. Thereby, the battery cells can be more stable during pre-stacking.

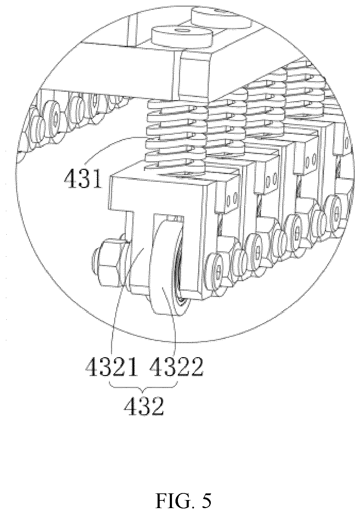

As shown in FIG. 5, in some embodiments, the limit assembly 43 includes a telescopic member 431 and a pressing member 432, where the telescopic member 431 is retractably connected between the main body 41 and the pressing member 432 along the height direction of the battery cells, and the pressing member 432 is configured to press the battery cells on the tray 20 along the height direction of the battery cells.

Specifically, the telescopic member 431 may be but is not limited to a spring, where the spring is elastically connected between the main body 41 and the pressing member 432, allowing the pressing member 432 to be elastically pressed on the battery cells.

Further, the telescopic member 431 and the pressing member 432 may be both provided in plurality, and the telescopic members 431 are in one-to-one correspondence with the pressing members 432.

It should be noted that a pole protrudes from each battery cell, and due to mechanical errors, there may be a certain error in pole height between different battery cells. Therefore, each pressing member 432 and telescopic member 431 may be correspondingly pressed on the pole of one battery cell. In addition, under the retraction of the telescopic member 431, the pressing member 432 can be adaptively pressed on the pole of the corresponding battery cell, allowing for more stable pressing of the pressing member 432 on the battery cell.

With the telescopic member 431 and the pressing member 432 provided, the battery cells can be pressed on the tray 20 more stably, so as to be kept in balance while being pushed.

In some embodiments, the pressing member 432 includes a connection portion 4321 and a rolling portion 4322, where the connection portion 4321 is connected to the telescopic member 431, and the rolling portion 4322 is rollably disposed on the connection portion 4321 along the arrangement direction of the battery cells and configured to roll to press the battery cells on the tray 20 along the height direction of the battery cells.

When a plurality of pressing members 432 are provided, each pressing member 432 includes a connection portion 4321 and a rolling portion 4322. Specifically, the rolling portion 4322 may be but is not limited to a scroll wheel, where the scroll wheel is disposed on the connection portion 4321 in a scrolling manner. When the pressing member 432 is pressed on the battery cells, the pushing assembly 50 applies pressure to the battery cells along the arrangement direction of the battery cells, enabling the battery cells to move toward and attach to each other along the arrangement direction.

In addition, when the battery cells displace along the arrangement direction under the pressing, the rolling portion 4322 can roll to press the battery cells, allowing for more stable pressing on the battery cells while not affecting the movement of the battery cells in the arrangement direction.

With the rolling portion 4322 provided, rollable pressing can be achieved between the pressing member 432 and the battery cells, and a pressing force can be applied constantly when the battery cells approach each other along the arrangement direction, thus making the pressing process more stable.

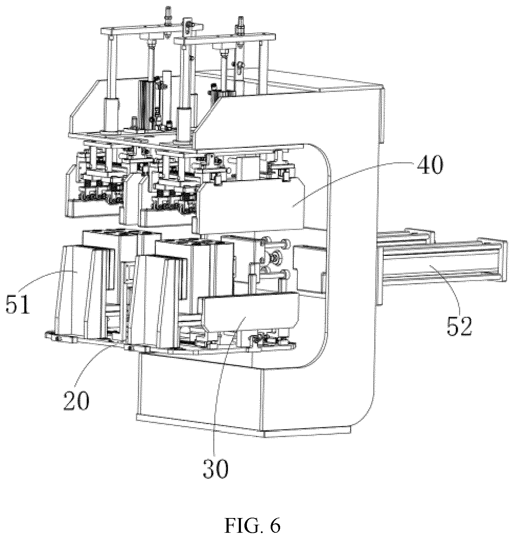

As shown in FIG. 6, in some embodiments, the pushing assembly 50 includes an abutment member 51 and a pushing member 52, where the abutment member 51 is disposed on the tray 20, the pushing member 52 is movably disposed on the mounting seat 10 along the arrangement direction of the battery cells, the abutment member 51 and the pushing member 52 are respectively located on two sides of the tray 20 along the arrangement direction of the battery cells, and the pushing member 52 is configured to be capable of pushing, along the arrangement direction of the battery cells, the battery cells on the tray 20 to abut against the abutment member 51.

Specifically, the abutment member 51 is a baffle disposed on the tray 20. Specifically, when the battery cells move along with the tray 20 to the pressurization position 12, the pushing member 52 and the abutment member 51 are respectively located on two sides of the battery cells along the arrangement direction of the battery cells. The pushing member 52 moves along the arrangement direction of the battery cells and applies a pushing force to the battery cells along the arrangement direction of the battery cells, allowing the plurality of battery cells to closely attach to each other.

Further, the pushing member 52 may be but is not limited to a pressurizing cylinder. When the battery cells are arranged on the tray 20 along the thickness direction, the pushing member 52 extends and applies a pushing force on the largest side surface of the battery cells, thus allowing the plurality of battery cells to closely attach to each other.

Through the cooperation between the abutment member 51 and the pushing member 52, the plurality of battery cells can be pre-stacked smoothly to closely attached to each other along the arrangement direction, thus facilitating the subsequent assembly.

Still referring to FIGs. 1 and 2, in some embodiments, the mounting seat 10 includes a base 13 and a support member 14 rotatably disposed on the base 13. The support member 14 is provided with a pressurization position 12 and at least two pre-stacking positions 11, where the pressurization position 12 and the at least two pre-stacking positions 11 are spaced along a circumferential direction of the support member 14, and one tray 20 and one first clamping assembly 30 are correspondingly disposed in each of the pre-stacking positions 11. The second clamping assembly 40 and the pushing assembly 50 are both disposed in the pressurization position 12. The second clamping assembly 40 is configured to, when one of the trays 20 is rotated to the pressurization position 12, clamp the battery cells on the tray 20 along a width direction of the battery cells; and the pushing assembly 50 is configured to, when one of the trays 20 is rotated to the pressurization position 12, push the battery cells on the tray 20.

Specifically, the support member 14 may be arranged as a rotary table, and the rotary table is provided with three pre-stacking positions 11 and one pressurization position 12 that are spaced along the circumferential direction of the support member 14. Each of the pre-stacking positions 11 and the pressurization position 12 are each provided with a tray 20, the plurality of battery cells are sequentially arranged on the tray 20 along the thickness direction, and the first clamping assembly 30 on the tray 20 clamps and fixes the lower side of the battery cells.

When the tray 20 rotates along with the rotary table to the pressurization position 12, the second clamping assembly 40 moves downwards and clamps the upper side of the battery cells. In addition, the pressing member 432 presses downwards against the pole of each battery cell, making the battery cells disposed on the tray 20 more stably.

Further, the pushing assembly 50 in the pressurization position 12 pushes the battery cells, that is, applies a pushing force to the largest side surface of the battery cells, allowing the plurality of the battery cells to attach to each other in the arrangement manner.

With the support member 14 provided, the battery cells can be stacked synchronously in a plurality of pre-stacking positions 11 and sequentially rotated to the pressurization position 12 for pressurization, thus improving the efficiency of pre-stacking the battery cells.

Based on the same concept as the pre-stacking apparatus 100, this application further provides battery processing equipment, including the foregoing pre-stacking apparatus 100.

According to one or more embodiments, an external mechanical hand is used to sequentially move the plurality of battery cells to the tray 20 in a first pre-stacking position 11. After the tray 20 is fully loaded, the first clamping assembly 30 clamps the lower sides of the battery cells on the tray 20, thus stabilizing them on the tray 20. The support member 14 is rotated and the battery cells are moved to the tray 20 in the next pre-stacking position 11.

With the rotation of the support member 14, when one of the trays 20 has moved to the pressurization position 12, the second clamping assembly 40 is controlled to descend to clamp and fix the upper side of the battery cells. In addition, under the action of the telescopic member 431, the pressing member 432 is adaptively pressed on the pole of the corresponding battery cell.

After the pressing is stabilized, the pushing member 52 is controlled to move towards the battery cells and apply a pushing force to the largest side surface of the battery cells. Under the action of the pushing force, the plurality of battery cells approach each other along the arrangement direction and abut against the abutment member 51 until they closely attach to each other. At this moment, pre-stacking the battery cells on the tray 20 is completed. The support member 14 is rotated again, facilitating the pushing operation on the battery cells on the next tray 20.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A pre-stacking apparatus, comprising:
a mounting seat, wherein the mounting seat is provided with a pre-stacking position and a pressurization position;
a tray, disposed on the mounting seat, wherein the tray is configured to bear at least two battery cells, and the battery cells are arranged along a thickness direction of the battery cells;
a first clamping assembly, disposed on the tray and configured to clamp the battery cells on the tray;
a second clamping assembly, disposed in the pressurization position and configured to be capable of being apart from the first clamping assembly along a height direction of the battery cells when the tray has moved from the pre-stacking position to the pressurization position, and to clamp the battery cells on the tray; and
a pushing assembly, movably disposed in the pressurization position along the arrangement direction of the battery cells and configured to push the battery cells on the tray in the pressurization position to attach to each other.

2. The pre-stacking apparatus according to claim 1, wherein the second clamping assembly is movably disposed on the mounting seat along the height direction of the battery cells.

3. The pre-stacking apparatus according to claim 1 or 2, wherein the first clamping assembly and the second clamping assembly each comprise a first clamping member and a second clamping member that are respectively disposed on two sides of the tray along a width direction of the battery cells, at least one of the first clamping member and the second clamping member being movably disposed along the width direction of the battery cells.

4. The pre-stacking apparatus according to claim 3, wherein the second clamping assembly further comprises a main body and a first drive member, wherein the first drive member is connected between the main body and the mounting seat and configured to drive the main body to move along the height direction of the battery cells;
wherein the first clamping member and the second clamping member in the second clamping assembly are disposed on the main body.

5. The pre-stacking apparatus according to claim 4, wherein the second clamping assembly further comprises a limit assembly disposed on the main body and located between the first clamping member and the second clamping member, the limit assembly being configured to press the battery cells on the tray along the height direction of the battery cells.

6. The pre-stacking apparatus according to claim 5, wherein the limit assembly comprises a telescopic member and a pressing member, wherein the telescopic member is retractably connected between the main body and the pressing member along the height direction of the battery cells, and the pressing member is configured to press the battery cells on the tray along the height direction of the battery cells.

7. The pre-stacking apparatus according to claim 6, wherein the pressing member comprises a connection portion and a rolling portion, wherein the connection portion is connected to the telescopic member, and the rolling portion is rollably disposed on the connection portion along the arrangement direction of the battery cells and configured to roll to press the battery cells on the tray along the height direction of the battery cells.

8. The pre-stacking apparatus according to any one of claims 1 to 7, wherein the pushing assembly comprises an abutment member and a pushing member, wherein the abutment member is disposed on the tray, the pushing member is movably disposed on the mounting seat along the arrangement direction of the battery cells, the abutment member and the pushing member are respectively located on two sides of the tray along the arrangement direction of the battery cells, and the pushing member is configured to be capable of pushing, along the arrangement direction of the battery cells, the battery cells on the tray to abut against the abutment member.

9. The pre-stacking apparatus according to any one of claims 1 to 8, wherein the mounting seat comprises a base and a support member rotatably disposed on the base, the support member is provided with a pressurization position and at least two pre-stacking positions, wherein the pressurization position and the at least two pre-stacking positions are spaced along a circumferential direction of the support member, one tray and one first clamping assembly are correspondingly disposed in each of the pre-stacking positions, and the second clamping assembly and the pushing assembly are both disposed in the pressurization position;
wherein the second clamping assembly is configured to, when one of the trays is rotated to the pressurization position, clamp the battery cells on the tray along a width direction of the battery cells; and the pushing member is configured to, when one of the trays is rotated to the pressurization position, push the battery cells on the tray.

10. Battery processing equipment, comprising the pre-stacking apparatus according to any one of claims 1 to 9.
